# EUROPEAN PATENT APPLICATION

(11) **EP 4 488 838 A1**
(43) Date of publication of application: **08.01.2025**
(21) Application number: 24186819.9
(22) Date of filing: 05.07.2024
(51) Int. Cl.: G06F 12/1009

(54) **MEMORY MANAGEMENT METHOD BASED ON VIRTUAL MEMORY AND APPARATUS USING THE SAME**

(30) Priority: 07.07.2023 KR 20230088375
(71) Applicant: Samsung Electronics Co., Ltd, Suwon-si, Gyeonggi-do 16677 (KR)
(72) Inventor: Shin, Youngsam, 16678 Suwon-si, Gyeonggi-do (KR); Oh, Deok Jae, 16678 Suwon-si, Gyeonggi-do (KR); Cho, Yeongon, 16678 Suwon-si, Gyeonggi-do (KR)
(74) Representative: Grünecker Patent- und Rechtsanwälte PartG mbB

(57) **Abstract**

A memory device includes a memory and a controller. The memory is configured to store data. The controller is configured to receive first address data based on multi-level paging from a processing unit, convert the first address data into second address data by performing on at least one of levels a page table walk of the multi-level paging, and access the memory using the second address data.

## Description

### 1. Technical Field

The following description relates to a memory management method based on virtual memory and an apparatus using the same.

### 2. Discussion of Related Art

Virtual memory is a memory management method that allocates a memory space for a process to a virtual address space instead of allocating the memory space directly to a physical memory space. The process may read and write data using a virtual address of the virtual address space. However, the virtual address needs to be translated into a physical address of the physical memory space before the data can be accessed. The translation of the virtual address into the physical address happens via a data structure referred to as page table.

In Single-level paging, a single-level page table holds entries for all virtual pages of the virtual address space. However, the single-level page table can become quite large, potentially consuming a significant portion of physical memory, thereby reducing the available space for actual data and programs.

In Multi-level paging, the page table is divided into smaller hierarchical levels, each level pointing to the next to create a multi-level page table that is used for translating the virtual memory address into the physical memory address without consuming a significant portion of physical memory, thereby increasing the available space for actual data and programs. In Multi-level paging, the virtual memory address is translated into the physical memory address by performing a page table walk to traverse the multi-level page table. However, system performance may be reduced since a page table walk may involve multiple memory accesses before reaching the physical address.

### SUMMARY

The invention is what is claimed in the independent claims. Preferred embodiments are specified in the dependent claims.

According to an embodiment, a memory device includes a memory and a controller. The memory is configured to store data. The controller is configured to receive first address data based on multi-level paging from a processing unit, convert the first address data into second address data by performing a page table walk on at least one of levels of the multi-level paging, and access the memory using the second address data.

According to an embodiment, a memory management method of a memory device includes: receiving first address data based on multi-level paging from a processing unit; converting the first address data into second address data by performing a page table walk on at least one of levels of the multi-level paging; and accessing the memory using the second address data.

According to an embodiment, a compute express link (CXL) memory device includes a memory and a controller. The memory is configured to store data. The controller is configured to receive first address data based on multi-level paging from a host device using a CXL connection, convert the first address data into second address data by performing a page table walk on at least one of levels of the multi-level paging, and access the memory using the second address data.

According to an embodiment, an electronic device is provided that includes a memory device and a processing unit. The memory device includes a memory and a controller. The processing unit is configured to perform at least one of a plurality of levels of a page table walk on a first virtual address to output a second virtual address to the memory device. The controller is configured to perform at least one remaining level among the plurality of levels of the page table walk on the second virtual address to generate a third virtual address to access data stored in the memory.

### BRIEF DESCRIPTION OF THE DRAWINGS

FIG. 1 illustrates an example of an address conversion operation of a memory device according to an embodiment.
FIG. 2A illustrates an example of an address conversion operation according to an embodiment.
FIG. 2B illustrates an example of address data based on multi-level paging and a page table walk for the address data, according to an embodiment.
FIG. 2C illustrates an example of offloading for page management of a memory device according to an embodiment.
FIG. 3A illustrates an example of a configuration of a memory device, according to an embodiment.
FIG. 3B illustrates an example of a configuration of a memory device including a page manager according to an embodiment.
FIG. 3C illustrates a flowchart of a swap-load operation according to an embodiment.
FIG. 3D illustrates a flowchart of a swap-store operation according to an embodiment.
FIG. 4 illustrates an example of a configuration of an electronic device according to an embodiment.
FIGS. 5 and 6 illustrate examples of a compute express link (CXL) system according to an embodiment.
FIG. 7 illustrates an example of a conversion process of a huge page and subpages according to an embodiment.
FIG. 8 illustrates a flowchart of a memory management method of a memory device according to an embodiment.

### DETAILED DESCRIPTION

Embodiments will now be described more fully hereinafter with reference to the accompanying drawings. Embodiments may, however, be provided in different forms and should not be construed as limiting. The same reference numbers may indicate the same components throughout the disclosure.

It should be noted that if one component is described as being "connected", "coupled", or "joined" to another component, a third component may be "connected", "coupled", and "joined" between the first and second components, although the first component may be directly connected, coupled, or joined to the second component. As used herein, the singular forms "a," "an," and "the" are intended to include the plural forms as well, unless the context clearly indicates otherwise.

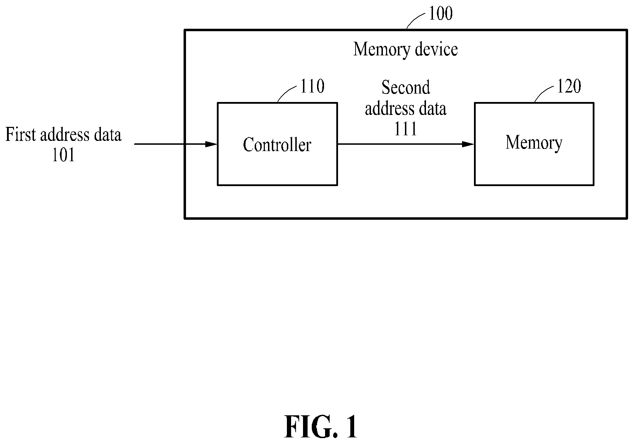

FIG. 1 illustrates an example of an address conversion operation of a memory device according to an embodiment. Referring to FIG. 1, a memory device 100 may include a controller 110 (e.g., a control circuit) and a memory 120. The memory 120 may store data. The memory 120 may correspond to dynamic random access memory (DRAM), static random access memory (SRAM), magnetic random access memory (MRAM), phase-change random access memory (PRAM), and the like, but is not limited thereto.

The controller 110 may perform various control operations related to the memory device 100 for accessing the memory 120. For example, the control operations may include a load operation and a store operation. The load operation may read data from the memory 120 based on a received read address and the store operation may store data to the memory 120 based on a received write address. For example, the controller 110 may correspond to a memory controller, a buffer chip (e.g., a dual inline memory modules (DIMM) buffer chip), a server controller (e.g., a baseboard management controller (BMC)), but is not limited thereto.

As system memory capacity increases, a task for virtual memory may occupy a large portion of the workload of a processing unit (e.g., a central processing unit (CPU) or a host) in the system. In an embodiment, the controller 110 functions as an accelerator for the processing unit by offloading a function for page management in the virtual memory management system.

According to an embodiment, the controller 110 may perform near memory processing (NMP) or processing in memory (PIM). NMP may refer to a memory technique of computing data while simultaneously storing data. According to NMP, unlike a general computing structure, a computing function may be performed in addition to a read function and a write function near the memory device 100 or inside the memory device 100. Accordingly, some operations of the processing unit may be offloaded to the memory device 100.

According to NMP, data movement may decrease. Because data to be processed is processed by the memory device 100 that is close to the data, a data movement cost may decrease. In addition, a large volume of data need not be transferred between the memory device 100 and the processing unit and may be directly processed by the memory device 100.

According to NMP, high throughput and low latency may be achieved. NMP may use a memory sub-parallel structure unique to the memory device 100 and thereby high throughput may be achieved. In addition, because data and a processing subject (e.g., data to process) are located physically close, a waiting time and a response time may be reduced.

According to NMP, energy efficiency may increase. Data movement between the memory device 100 and the processing unit may occupy a large portion of system power consumption, and the NMP technique may reduce this cost by minimizing data movement.

According to NMP, high scalability may be provided through parallel processing. Concurrent processing of data may be performed using several independent memory substructures unique to the memory device 100 and this may be suitable for large-scale data work.

When NMP is performed by the controller 110, the memory device 100 may correspond to an NMP memory device, such as an acceleration DIMM (AXDIMM), a compute express link-AXDIMM (CXL-AXDIMM), and a CXL-disaggregated memory pool (CXL-DMP). According to an embodiment, the memory device 100 includes a calculator (e.g., a logic circuit) and the controller 110 processes an offloaded operation using the calculator. According to an embodiment, the calculator has an operation architecture based on a memory crossbar for NMP, but is not limited thereto.

The processing unit in the system may include a memory management unit (MMU). The MMU may perform an address conversion operation. The controller 110 may be distinguished from the MMU of the processing unit. The controller 110 may perform an address conversion operation in cooperation with the MMU or independently. The MMU may be implemented using hardware and includes logic circuits, registers and tables,

An NMP-based acceleration technique may be useful when processing a data-intensive application requiring a high memory bandwidth. However, when NMP is applied to a conventional computing system, it may be difficult to support the virtual memory of a processing unit. In the virtual memory system, an operating system (or a kernel) of the processing unit may map a virtual memory address onto a physical memory address space of a main memory in the unit of pages and may store page mapping metadata containing the mapping information in a table (e.g., a page table).

Accordingly, even when data has consecutive virtual memory addresses, the data may be scattered in the actual main memory. When the memory device 100 attempts to process data based on NMP, it may be difficult to map a virtual memory address onto a physical memory address if a virtual address system of the data to be processed is unknown.

In this process, an address conversion process using a page table may be an obstacle. When duplicating and performing a page table walk of the processing unit, latency issues, processor compatibility issues, or synchronization issues may occur. A memory area to be used by NMP may be reserved in advance in the main memory when booting the system that maps and dedicatedly uses the memory area for NMP. However, such may cause an inefficient use of memory use or data to move to a reserved area.

According to an embodiment, page table management and a page table walk are performed by the memory device 100. Thus, an operation cost of the processing unit is offloaded to the memory device 100. Further, the memory device 100 may manage a predetermined portion of the virtual memory by itself without intervention of the processing unit or the operating system. For example, the memory device 100 may manage a predetermined sub-portion of a virtual memory address.

In an embodiment, when the processing unit uses 4-level multi-level paging, a memory area of the memory device 100 (e.g., a CXL memory) is set to be a huge page (e.g., a huge page of 2 MB), the processing unit performs first to third levels of address conversion, and the controller 110 of the memory device 100 may perform the remaining fourth level of address conversion. In this embodiment, an address converted in the third level may be transmitted to the memory device 100 and the controller 110 may determine a physical address by using the transmitted address.

More specifically, the controller 110 may convert first address data 101 into second address data 111. For example, converting the first address data 101 into the second address data may be the fourth level of address conversion. A system including the memory device 100 may use virtual memory and the virtual memory may be managed based on multi-level paging. Virtual memory may be a memory management technique that allocates a memory space for a process to a virtual address space rather than directly allocating the required memory space to physical memory. The virtual address space may be an abstract memory space provided to a process. The process may read and write data using a virtual address space as if the process actually uses physical memory. Multi-level paging may be one of a plurality of available virtual memory management techniques. The Multi-level paging may be a technique of using a hierarchical structure to convert a virtual memory address (hereinafter, simply referred to as a virtual address) into a physical memory address (hereinafter, simply referred to as a physical address). A detailed description of multi-level paging is provided below.

In an embodiment, the controller 110 receives the first address data 101 based on a multi-level paging from the processing unit of the system, converts the first address data 101 into the second address data 111 by performing a page table walk on at least one of levels of the multi-level paging, and accesses the memory 120 using the second address data 111. According to multi-level paging, a virtual memory address may be mapped onto a physical memory address through various levels of a hierarchical structure. A process of finding mapping information of a virtual memory address and a physical memory address may be referred to as a page table walk. In multi-level paging, a page table walk may be performed on each level of the hierarchical structure. A detailed description of page table walk is provided below.

A virtual address allocated to a process may be referred to as an initial virtual address or a first virtual address. An address conversion result according to a portion of levels of the page table walk based on an initial virtual address or a first virtual address may be referred to as an intermediate virtual address or an n-th virtual address. Here, n may be an integer greater than 1 and less than or equal to N, where N may correspond to the number of levels included in multi-level paging.

The first address data 101 may be transmitted by the processing unit in the system. The first address data 101 may correspond to the first virtual address or an n-th virtual address. When the first address data 101 is transmitted when page table walk is not performed by the processing unit, the first address data 101 may correspond to the first virtual address. When a portion of levels of page table walk of the multi-level paging is performed by the processing unit, the first address data 101 may correspond to an n-th virtual address requiring a page table walk of the following level of the portion of the levels. For example, when a first level of page table walk is performed by the processing unit, the first address data 101 may correspond to a second virtual address and when first to third levels of page table walk are performed by the processing unit, the first address data 101 may correspond to a fourth virtual address.

The controller 110 may convert the first address data 101 into the second address data 111 by performing a page table walk on at least one of levels of the multi-level paging. When the first address data 101 is transmitted when a page table walk is not performed by the processing unit, in other words, when the first address data 101 corresponds to the first virtual address, all levels of the page table walk of multi-level paging may be performed by the controller 110. When the page table walk on a portion of levels of the multi-level paging is performed by the processing unit, the remaining levels of page table walk of multi-level paging may be performed by the controller 110. The first virtual address may be converted into the first address data 101 by the page table walk on the portion of the levels and the first address data 101 may be converted into the second address data 111 corresponding to a physical address by the remaining levels of the page table walk.

In an embodiment, the multi-level paging has a hierarchical structure having a total of 4 levels. In this embodiment, when a page table walk is not performed by the processing unit, the first to fourth levels of page table walk are performed by the controller 110. In an embodiment when the first to third levels of page table walk are performed by the processing unit, the fourth level of the page table walk is performed by the controller 110.

The controller 110 may access the memory 120 using the second address data 111 after converting the first address data 101 into the second address data 111. For example, the controller 110 may load page data of the second address data 111 or may store page data in the second address data 111. The second address data 111 may indicate a physical address corresponding to a final conversion result. For example, the controller may 110 may read page data stored at the physical address or store the page data at the physical address.

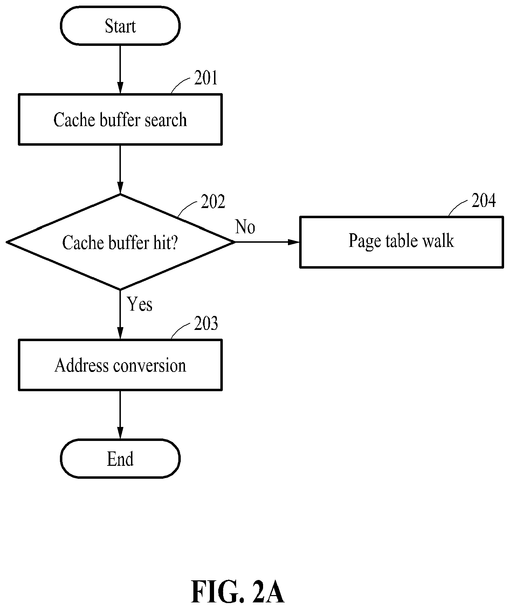

FIG. 2A illustrates an example of an address conversion operation according to an embodiment. Virtual memory may be one of methods of managing memory in a computing system and may be a method of allocating a virtual memory address to a process rather than an actual physical memory address. By using the virtual memory, a memory size of the actual physical memory may be logically expand for use. The virtual memory may be managed in units of pages and the physical memory may be managed in the units of frames.

Referring to FIG. 2A, through operations 201 to 204, a virtual address may be converted into a physical address. Operations 201 to 204 may be performed by an MMU of a processing unit and/or a controller of a memory device. When the memory device includes a page table manager, the page table manager may be involved in address conversion of the memory device. In an embodiment, the page table manager may be implemented by a logic circuit.

In operation 201, a cache buffer search is performed. The cache buffer may be used to increase the efficiency of an address conversion operation by reducing the number of memory accesses required for an address conversion process. In an embodiment, the cache buffer corresponds to a pseudo cache that is different from the cache of a processor. For example, a table lookaside buffer (TLB) of the processing unit and a table cache of the memory device may correspond to the cache buffer for the address conversion operation.

Through the cache buffer search, it is determined whether mapping information related to the given virtual address exists in the cache buffer. The page table may store mapping information between virtual addresses and physical addresses. The page table may correspond to a mapping table between virtual addresses and physical addresses and individual mapping information in the mapping table may be referred to as a page table entry (PTE).

In operation 202, a cache hit status is checked. Through the cache buffer search, it may be determined whether a PTE related to the given virtual address exists in the cache buffer. Information of a PTE recently used for address conversion may be stored in the cache buffer. The cache buffer may store recent information as much as a predetermined size. A cache hit may occur when the mapping information related to the given virtual address exists in the cache, and a cache miss may occur when the mapping information related to the given virtual address does not exist in the cache.

When a cache hit occurs, address conversion is performed in operation 203. The address conversion may be performed using a PTE in the cache buffer without performing an additional memory access.

When a cache miss occurs, a page table walk is performed in operation 204. The page table walk may be an operation of accessing a page table to obtain mapping information. Memory access may be performed through the page table walk and address conversion may be performed through mapping information of a page table in the memory. When a PTE of the given virtual address does not exist in a page table of the memory, a page fault may occur and the page table may be updated based on a page replacement algorithm. The page table may be updated based on page information transmitted to the memory from an auxiliary storage device (e.g., a disk).

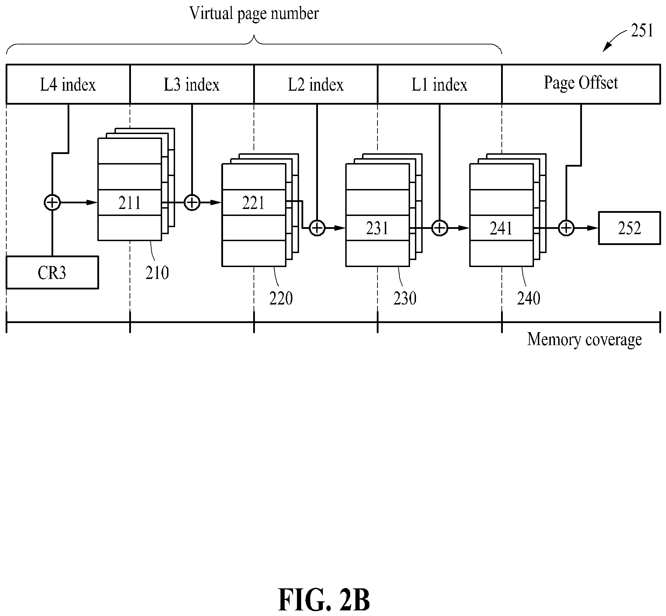

FIG. 2B illustrates an example of address data based on multi-level paging and a page table walk for the address data, according to an embodiment. Referring to FIG. 2B, a virtual address 251 may be converted into a physical address 252 by performing a page table walk based on multi-level paging. FIG. 2B illustrates an example of using a hierarchical structure having 4 levels, but embodiments are not limited thereto. For example, a hierarchical structure having more than 5 levels (e.g., 64-bits) or less than 4 levels may be used.

Each operation of a process may be performed in units of pages. The number of pages may be determined based on a page size of the pages and the number of representable bits supported by a processor. For example, when the number of representable bits of the virtual address 251 is 48-bits, a virtual memory space of 256 TB that is 2^48 may be represented through the virtual address 251. When the page size is 4 KB, 64 billion pages that is 256 TB / 4 KB may be obtained. Since a page table supports as many indexes as the number of pages, 64 billion indexes may be included and the virtual address 251 may occupy an address space in a range of Ox00000000_00000000 to 0x0000ffff_ffffffff.

As described above, when using the virtual address 251 without a hierarchical structure, too much address space may be required. Accordingly, the virtual address 251 may be managed using multi-level paging based on a page table having multiple levels. When using multi-level paging, a page table walk may be performed for each level of the hierarchical structure.

Referring to FIG. 2B, upper bits excluding a page offset of the virtual address 251 may be respectively assigned to levels of the hierarchical structure. For example, the number of representable bits of the virtual address 251 may be 48-bits and 9-bits may be assigned to each of L1 to L4 indexes. In this case, by using a total of 36-bits of indexes, a page table in the hierarchical structure having 4 levels may be operated. When a virtual page number is specified based on 4 levels of page table walk using the 36-bits indexes of the virtual address 251, a PTE in a page table may be specified based on a virtual page number using the remaining 12-bits of page offset of the virtual address 251. In this case, memory coverages of a page offset, and L1 to L4 indexes may be 4 KB, 2 MB, 1 GB, 512 GB, and 256 TB, respectively.

When an entry of a data set (e.g., a table) of a level is specified based on an index of the level, the entry may be used as a pointer indicating a data set of the following level. For example, a first data set 210 may be constructed based on an L4 index of a first level and each entry of the first data set 210 may be used as a pointer indicating a second data set 220 of a second level.

A first base address of the first data set 210 may be stored in a CR3 register. A sum of the first base address and the L4 index may specify a first entry 211. The first entry 211 may specify a second base address of the second data set 220. Using the method as described above, a third entry 231 of a third data set 230 and a fourth entry 241 of a fourth data set 240 may be specified based on an L2 index and an L1 index. The third data set 230 may correspond to a page directory table 230 and the fourth data set 240 may correspond to a page table. The third entry 231 may correspond to a page directory entry (PDE) and the fourth entry 241 may correspond to a PTE. When a page is specified by the fourth entry 241, the physical address 252 in the page may be determined using a page offset. For example, the physical address 252 may be determined from the PTE and the page offset.

In the LINUX operating system, the virtual address 251 may be converted into the physical address 252 through a page global directory (PGD) of the first level, a page upper directory (PUD) of the second level, a page mid-level directory (PMD) of the third level, and the PTE of the fourth level. However, embodiments are not limited to any particular operating system. When using multi-level paging, access to memory (or a device in which a page table is stored) in each operation may be required. When the page size is 4 KB, a cache buffer miss may cause a memory access cost for 4 accesses.

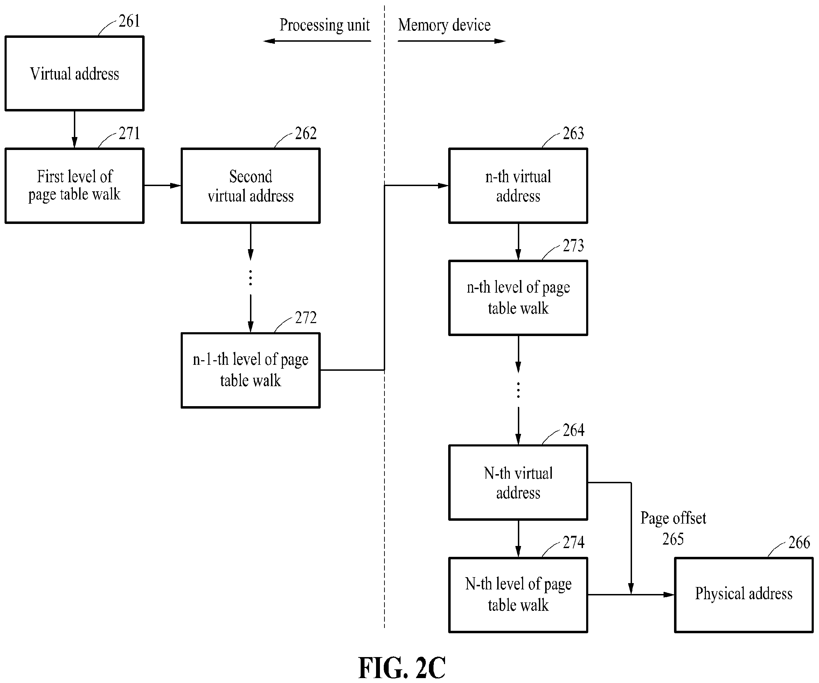

FIG. 2C illustrates an example of offloading for page management of a memory device according to an embodiment. FIG. 2C illustrates an example of using N-level multi-level paging. A processing unit may perform a first level of page table walk 271 to an n-1 -th level of page table walk 272 and a memory device may perform an n-th level of page table walk 273 to an N-th level of page table walk 274. However, embodiments are not limited thereto. The page table walks 271 to 274 may be differently combined from the example shown in FIG. 2C and may be performed by the processing unit and/or the memory device, such as the first level of the page table walk 271 may be performed by the processing unit and the rest may be performed by the memory device or the first level of the page table walk 271 to the N-th level of the page table walk 274 may be performed by the memory device. Here, n may be an integer greater than 1 and less than or equal to N, where N may correspond to the number of levels included in multi-level paging.

The processing unit may perform the first level of the page table walk 271 based on the virtual address 261. The second virtual address 262 may be determined by the first level of the page table walk. The second virtual address 262 may include a conversion result (e.g., the first entry 211 of FIG. 2B) of the first level of the page table walk 271, remaining indexes (e.g., an L4 index, an L3 index, and an L2 index of the virtual address 251 of FIG. 2B) of the remaining levels of multi-level paging, and a page offset (e.g., the page offset of the virtual address 251 of FIG. 2B).

The processing unit may perform the n-1-th level of the page table walk 272 based on an n-1-th virtual address (not shown). An n-th virtual address 263 may be determined by the n-1-th level of the page table walk 272. The n-th virtual address 263 may be transmitted to the memory device. For example, n=4. In this case, the n-th virtual address 263 may include a conversion result (e.g., the third entry 231 of FIG. 2B) of the n-1-th level (e.g., the third level) of the page table walk 272, remaining indexes (e.g., the L1 index of the virtual address 251 of FIG. 2B) of the remaining levels of multi-level paging, and a page offset (e.g., the page offset of the virtual address 251 of FIG. 2B).

The memory device may perform the n-th level of the page table walk 273 based on the n-th virtual address 263. An n+1-th virtual address (not shown) may be determined by the n-th level of the page table walk 273. When the N-1-th level of the page table walk is performed, the N-th virtual address 264 may be determined and the memory device may perform the N-th level of the page table walk 274 based on the N-th virtual address 264. For example, when N=4, the n-th level of the page table walk 273 may be the same as the N-th level of the page table walk 274. In this case, the memory device may determine a physical address 266 by adding a page offset 265 (e.g., the page offset of the virtual address 251 of FIG. 2B) to a conversion result (e.g., the fourth entry 241 of FIG. 2B) of the n-th level of the page table walk 273 or the N-th level of the page table walk 274.

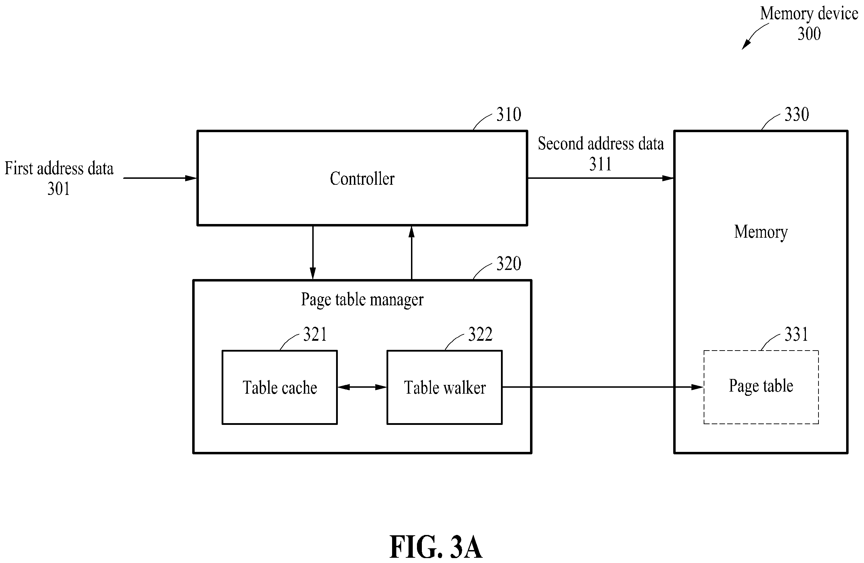

FIG. 3A illustrates an example of a configuration of a memory device, according to an embodiment. Referring to FIG. 3A, a memory device 300 may include a controller 310 (e.g., a control circuit), a page table manager 320 (e.g., a logic circuit), and a memory 330. In an embodiment, the memory is configured to store regular pages having a first size and huge pages having a second size larger than the first size.

The controller 310 may convert first address data 301 into second address data 311. When the first address data 301 is transmitted when a page table walk is not performed by a processing unit, the first address data 301 may correspond to a first virtual address. When a page table walk on a portion of levels of multi-level paging is performed by the processing unit, the first address data 301 may correspond to an n-th virtual address requiring a page table walk of the following level of the portion of the levels.

When the first address data 301 is transmitted and a page table walk is not performed by the processing unit when the first address data 301 corresponds to a first virtual address, the first address data 301 may include all data of an initial virtual address (e.g., the virtual address 251 of FIG. 2B). When a page table walk on a portion of levels of multi-level paging is performed by the processing unit and the first address data 301 corresponds to an n-th virtual address requiring a page table walk on the next level of the portion of the levels, the first address data 301 may include a conversion result of the portion of the levels of page table walk, remaining indexes of the remaining levels of multi-level paging, and a page offset.

For example, when the first to third levels of a page table walk of multi-level paging are performed by the processing unit, the first address data 301 may correspond to the fourth virtual address. In this case, the first address data 301 may include a third entry (e.g., the third entry 231 of the third data set 230 of FIG. 2B) of the third data set corresponding to a conversion result of the first to third levels of page table walk, a remaining index of the remaining fourth level (e.g., the L1 index of the virtual address 251 of FIG. 2B), and a page offset (e.g., a page offset of the virtual address 251 of FIG. 2B). The controller 310 may determine the second address data 311 by performing the remaining level of page table walk of multi-level paging based on the conversion result, the remaining index, and the page offset. For example, the controller 310 may specify a fourth entry (e.g., the fourth entry 241 of the fourth data set 240 of FIG. 2B) by adding the third entry (e.g., the third entry 231 of the third data set 230 of FIG. 2B) corresponding to the conversion result to the remaining index (e.g., the L1 index of the virtual address 251 of FIG. 2B) of the remaining fourth level and may determine the second address data 311 by adding the fourth entry to the page offset (e.g., the page offset of the virtual address 251 of FIG. 2B). The second address data 311 may correspond to a physical address.

The controller 310 may convert the first address data 301 into the second address data 311 using the page table manager 320. The page table manager 320 may be implemented by a hardware module and/or a software module. FIG. 3A illustrates that the page table manager 320 is disposed outside the controller 310. However, unlike FIG. 3A, the page table manager 320 may be located inside the controller 310. According to an embodiment, the memory device 300 includes a calculator and at least some of the controller 110, the page table manager 320, a table walker 322 process an offloaded operation (e.g., an address conversion operation) using the calculator.

The page table manager 320 may include a table cache 321 storing recent page table data (e.g., information of a PTE recently used for address conversion) and a table walker 322 performing a page table walk to find required page table data when the required page table data does not exist in the table cache 321. The controller 310 may request that the page table manager 320 perform address conversion of the first address data 301 and the page table manager 320 may determine the second address data 311 by performing address conversion using the table cache 321 and the table walker 322. The page table manager 320 may use the table cache 321 and the table walker 322 based on the address conversion operation of FIG. 2A. The page table manager 320 may determine the second address data 311 by performing the remaining level of page table walk of multi-level paging based on the conversion result, the remaining index, and the page offset. The page table manager 320 may return the second address data 311 corresponding to the address conversion result to the controller 310.

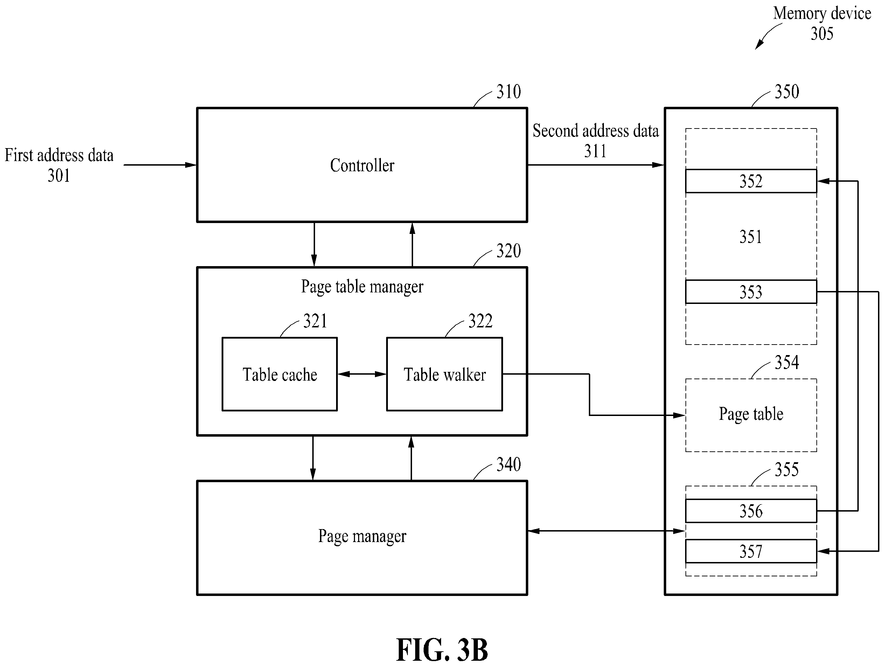

FIG. 3B illustrates an example of a configuration of a memory device including a page manager according to an embodiment. Referring to FIG. 3B, a memory device 305 further includes a page manager 340 (e.g., a logic circuit) compared to the memory device 300 of FIG. 3A. According to an embodiment, a huge page having a larger size than a regular page may be used. For example, a regular page may have a size of 4 KB, and a huge page 351 may have a size of 2 MB, however, embodiments are not limited thereto. The first address data 301 may correspond to a result of a page table walk at a step in which the huge page is identified.

The memory management efficiency may be increased by using the huge page in a trend of increasing workload and memory capacity. For example, by using the huge page, the address conversion process may be simplified and a cache buffer hit rate may increase. However, because the huge page has a larger size than a regular page, the memory efficiency may decrease when using only a portion of the huge page. The memory efficiency may be increased when the huge page is managed as segmented sub-pages in the memory device 305 (e.g., a CXL memory device). A conversion relationship between the huge page and the sub-page is described below.

The controller 310 may operate a compressed page using the page manager 340. The page manager 340 may be implemented by a hardware module and/or a software module. FIG. 3B illustrates that the page manager 340 is disposed outside the controller 310. However, unlike FIG. 3B, the page manager 340 may be located inside the controller 310. According to an embodiment, the memory device 300 includes a calculator and at least some of the controller 110, the page table manager 320, the table walker 322, and the page manager 340 processes an offloaded operation (e.g., a compression operation and a decompression operation) using the calculator.

In an embodiment, the page manager 340 compresses sub-pages of a huge page that is less frequently used based on on-demand paging and least recently used (LRU) to generated compressed sub-pages and stores the compressed sub-pages in a compressed memory space 355 in a memory 350. The page manager 340 may secure a valid memory space in a regular memory space 351 by compressing infrequently used sub-pages and storing the compressed sub-pages in the compressed memory space 355.

The memory 350 may include the regular memory space 351, a page table 354, and the compressed memory space 355. The sub-page of the regular memory space 351 may be stored in a compressed state in the compressed memory space 355 and the compressed sub-page of the compressed memory space 355 may be stored in a decompressed state in the regular memory space 351. An operation of compressing a sub-page of the regular memory space 351 to generate a compressed sub-page and storing the compressed sub-page in the compressed memory space 355 may be referred to as a swap-store. An operation of decompressing a compressed sub-page of the compressed memory space 355 to generate a decompressed sub-page and storing the decompressed sub-page in the regular memory space may be referred to as a swap-load.

A page fault may occur when a page to be accessed during the page table walk process does not exist in the page table 354. The page manager 340 may receive information (e.g., information for identifying a page, such as a valid address, a page frame number, and a sub-page frame number) on a page, may search for the page (e.g., the compressed sub-page 356) in the compressed memory space 355 using the information, and may perform a swap-load operation on the page. In response to the swap-load, a decompressed page (e.g., the sub-page 352) may be stored in the regular memory space 351. When a memory space of the regular memory space 351 is insufficient, the swap-store operation may be performed on another page (e.g., the sub-page 353). In response to the swap-store, a compressed page (e.g., the sub-page 357) may be stored in the compressed memory space 355.

Through page compression, inefficiency in memory use due to the use of the huge page may be increased. According to an embodiment, for compatibility with an existing operating system or a processing unit (e.g., a CPU and a host), the memory device 305 (e.g., a CXL memory device) performs a provisioning such that the memory device 305 provides a greater volume of memory than a physically providable memory volume during a system initialization step and the memory device 305 provides a virtual memory space to an operating system or a processing unit using an on-demand paging method and a compressed memory method. For example, when a page compression rate of the memory device 305 having a physical memory space of 512 GB is 50%, a memory space of 256 GB corresponding to 50% of the memory space may further be provided.

The description provided with reference to FIG. 3A may be applied to the memory device 305 of FIG. 3B.

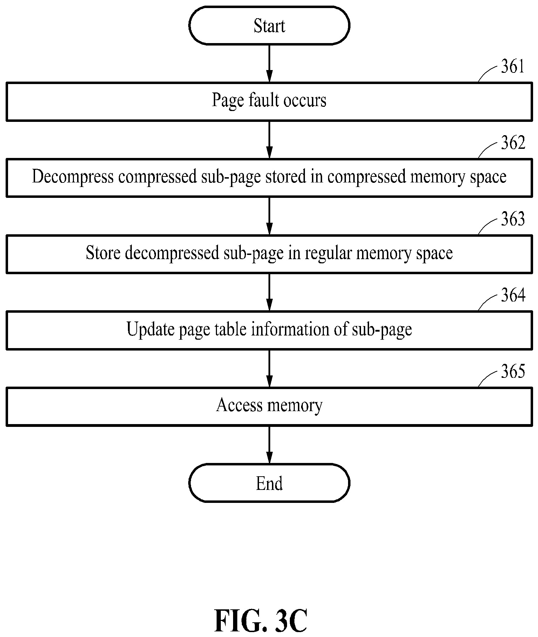

FIG. 3C illustrates a flowchart of a swap-load operation according to an embodiment. Referring to FIG. 3C, in operation 361, a page fault occurs. In operation 362, a compressed sub-page stored in a compressed memory space is decompressed to generate a decompressed sub-page when the page fault occurs. In operation 363, the decompressed sub-page is stored in a regular memory space (e.g., 351). Operations 362 and 363 may correspond to a swap-load. In operation 364, page table information of the sub-page is updated. In operation 365, memory access is performed. For example, load and/or store operations may be performed on the sub-page through the memory access. In addition, the description of FIG. 3B may apply to the swap-load operation of FIG. 3C.

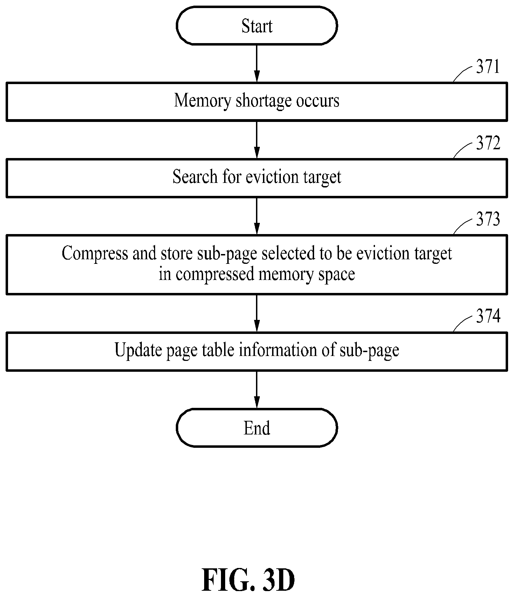

FIG. 3D illustrates a flowchart of a swap-store operation according to an embodiment. In operation 371, a memory shortage occurs. In operation 372, a search for an eviction target is performed. For example, the search may look for a sub-page to evict. The eviction target may be selected based on on-demand paging and LRU. In operation 373, a sub-page selected to be the eviction target is compressed to generate a compressed sub-page and the compressed sub-page is stored in a compressed memory space (e.g., 355). In operation 374, page table information of the sub-page is updated. In addition, the description of FIG. 3B may apply to the swap-store operation of FIG. 3D.

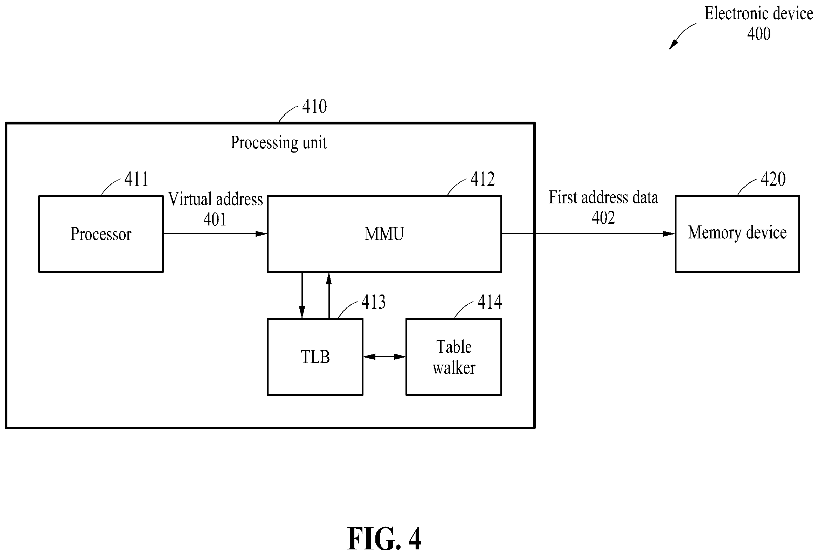

FIG. 4 illustrates an example of a configuration of an electronic device according to an embodiment. Referring to FIG. 4, an electronic device 400 includes a processing unit 410 and a memory device 420. The processing unit 410 includes a processor 411, an MMU 412, a TLB 413, and a table walker 414. The MMU 412, the TLB 413, or the table walker 414 may be implemented by logic circuits. The processor 411 may execute a process based on a virtual address 401. In response to address conversion on the virtual address 401, a physical address corresponding to the virtual address 401 may be determined and access to a memory of the memory device 420 based on the physical address may be performed.

Address conversion of the virtual address 401 may be divided into steps performed by the processing unit 410 and steps performed by the memory device 420. The MMU 412 may convert the virtual address 401 into first address data 402. The MMU 412 may perform address conversion using the TLB 413 and the table walker 414. When a cache buffer hit occurs like the address conversion operation of FIG. 2A, address conversion using the TLB 413 may be performed and when a cache buffer miss occurs, a page table walk using the table walker 414 may be performed. The memory device 420 may convert the first address data 402 into a physical address and may access the memory using the physical address. For example, the memory device 420 may perform a part of the page table walk to generate the physical address.

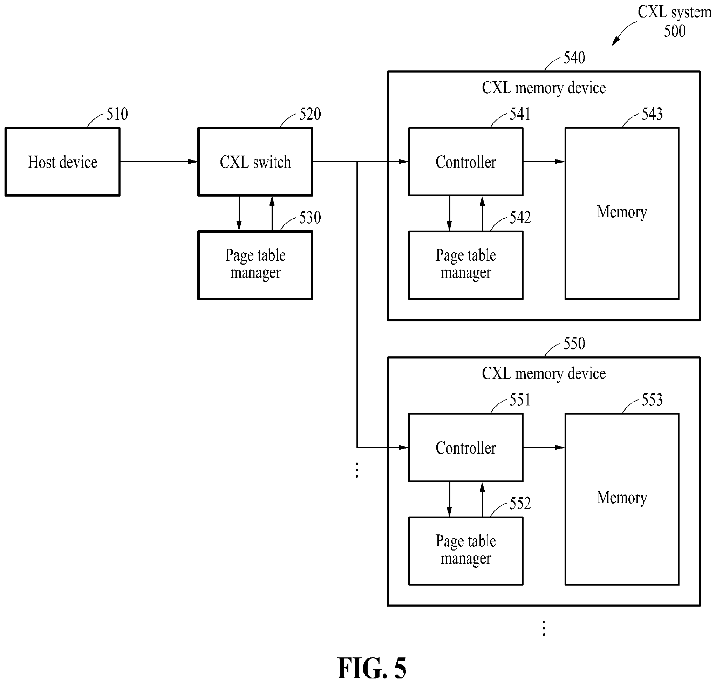

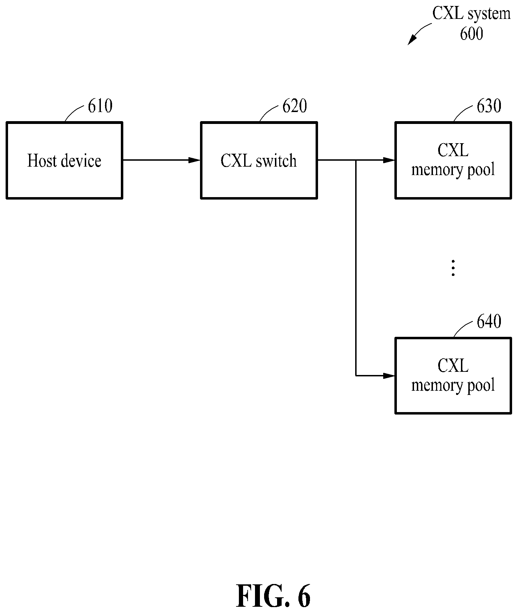

FIGS. 5 and 6 illustrate examples of a compute express link (CXL) system according to an embodiment. Referring to FIG. 5, a CXL system 500 includes a host device 510 executing a process that desires to perform a memory access, at least one CXL memory device (e.g., a CXL memory device 540 and a CXL memory device 550) configured to receive first address data based on multi-level paging in response to the memory access of the host device 510, convert the first address data into second address data by performing at least a level of a page table walk of multi-level paging, and access a memory (e.g., memories 543 and 553) using the second address data, and a CXL switch 520 connecting the host device 510 to the CXL memory device. A CXL connection may be used for connections between the host device 510 and the CXL switch 520, between the CXL switch 520 and the CXL memory device 540, and between the CXL switch 520 and the CXL memory device 550.

The CXL may be a connecting technique that supports cache consistency for a processor, a memory expander, or an accelerator. When a processor is connected to an additional component using the CXL, memory consistency may be maintained between a memory space of the processor and a memory space of the additional component through the CXL technique. Further, performance may be increased through resource sharing, complexity of software stack may decrease, and the overall system cost may decrease. A user may concentrate on workload rather than memory management of an accelerator. As a role of an accelerator that compensates for a processor to support a new application, such as artificial intelligence and machine learning, expands, the CXL may be provided as an open standard interface for high-speed communication. The CXL may provide a comprehensive interface environment for connecting a plurality of components, such as a processor, memory, an accelerator, and other peripheral devices.

The host device 510 may serve as a processing unit. The host device 510 may include a processor and an operating system or a kernel may be driven by the processor. The CXL switch 520 may connect the host device 510 to the CXL memory devices 540 and 550 using the CXL technique. Excellent scalability may be provided through the CXL switch 520. The memories 543 and 553 of the CXL memory devices 540 and 550 may provide a large capacity space. The CXL memory devices 540 and 550 may correspond to a memory device.

In the CXL system 500, an address conversion operation may be performed by at least some of the host device 510, the CXL switch 520, and the CXL memory devices 540 and 550. Conversion operations according to multi-level paging may be divided into steps and some of these steps may be performed by the host device 510, others of the steps may be performed by the CXL switch 520, and the remaining steps may be performed by the CXL memory devices 540 and 550. For example, when 4 levels of multi-level paging are used, a first page table walk and a second page table walk may be performed by the host device 510, a third page table walk may be performed by the CXL switch 520, and a fourth page table walk may be performed by controllers 541 and 551.

The CXL switch 520 may request one of the controllers 541 and 551 perform the remaining fourth page table walk based on a result of the third page table walk. When a page table based on the result of the third page table walk is stored in the memory 543, the fourth page table walk may be requested of the controller 541 and when the page table is stored in the memory 553, the fourth page table walk may be requested of the controller 551. Hereinafter, it is assumed that the controller 541 participates in address conversion.

The controller 541 may receive first address data based on multi-level paging though a CXL connection from the host device 510, may convert the first address data into second address data by performing at least a level of page table walk of multi-level paging, and may access data of the memory 543 using the second address data. The memory 543 may store data.

When a portion of levels of page table walk of multi-level paging is performed by the host device 510, the remaining levels of page table walk of multi-level paging may be performed by the controller 541. When a portion of levels of page table walk of multi-level paging is performed on a virtual address by the host device 510, the first address data may include a conversion result of the portion of the levels of the page table walk and remaining address data of remaining levels of multi-level paging. The controller 541 may determine the second address data by performing the remaining levels of page table walk of multi-level paging based on the conversion result and the remaining address data.

The CXL switch 520, the controller 541, and the controller 551 may use page table managers 530, 542, and 552 for address conversion, respectively. The page table managers 530, 542, and 552 may correspond to the page table manager 320 of FIGS. 3A and 3B. In addition, the descriptions provided with reference to FIGS. 1 to 4 may apply to the CXL system 500.

Referring to FIG. 6, a CXL system 600 includes a host device 610, a CXL switch 620, a CXL memory pool 630, and a CXL memory pool 640. The CXL memory pool 640 may correspond to the CXL memory devices 540 and 550 of FIG. 5 or may provide a larger memory space than the CXL memory devices 540 and 550. For example, the CXL memory pool 640 may include a plurality of CXL memory devices including the CXL memory devices 540 and 550.

In an embodiment of the CXL system 600, an address conversion operation is performed by at least some of the host device 610, the CXL switch 620, and the CXL memory pools 630 and 640. Conversion operations according to multi-level paging may be divided into steps and some of the steps performed may be performed by the host device 610, others of the steps may be performed by the CXL switch 620, and the remaining steps may be performed by the CXL memory pools 630 and 640. For example, when 4 levels of multi-level paging are used, first page table walk may be performed by the CXL switch 620 and the remaining page table walks may be performed by the CXL memory pools 630 and 640. In addition, the descriptions provided with reference to FIGS. 1 to 5 may apply to the CXL system 600. In an embodiment, the CXL memory pools 630 and 640 may be CXL memory cards.

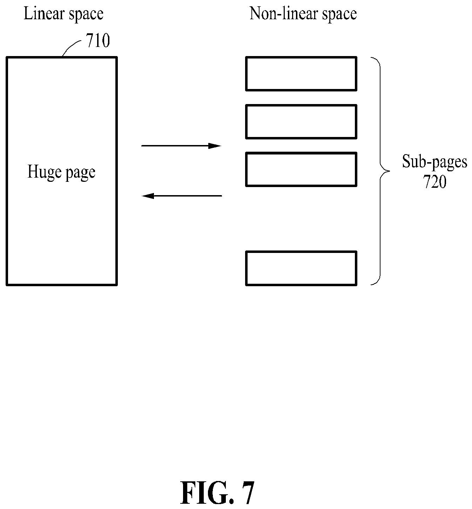

FIG. 7 illustrates an example of a conversion process of a huge page and subpages according to an embodiment. In an embodiment, a huge page 710 has a larger size than a regular page. For example, a regular page may have a size of 4 KB, and the huge page 710 may have a size of 2 MB, but embodiments are not limited thereto. The memory management efficiency may be increased by using the huge page 710 in a trend of increasing workload and memory capacity. For example, by using the huge page 710, the address conversion process may be simplified and a cache buffer hit rate may increase. However, because the huge page 710 has a larger size than a regular page, the memory efficiency may decrease when using only a portion of the huge page 710.

According to an embodiment, a processing unit performs address conversion on a level for managing the huge page 710 and a memory device performs address conversion on the remaining levels. For example, it may be assumed that the number of representable bits of the virtual address 251 of FIG. 2B is 48-bits, L1 to L4 indexes respectively use 9-bits, and a page offset uses 12-bits. In this case, the processing unit may perform a first level of a page table walk using the L4 index, a second level of the page table walk using the L3 index, and a third level of the page table walk using the L2 index. As a result, an address conversion result of the processing unit may indicate the huge page 710 of 2 MB. The memory device may find a PTE by performing a fourth level of the page table walk using the L1 index and may obtain a physical address by adding a page offset to an address value of the PTE. Accordingly, the memory device may prevent memory efficiency degradation due to the use of the huge page 710, and increase management convenience due to the use of the huge page 710.

In an embodiment, the huge page 710 is stored in a linear space having consecutive addresses. When the huge page 710 is split, sub-pages 720 of the huge page 710 may be stored in a non-linear space having inconsecutive (or non-consecutive) addresses. The sub-pages 720 may collapse and may be converted into the huge page 710 in the linear space.

When the huge page 710 exists in the linear space, data of the huge page 710 may be accessed through the physical address of the huge page 710. For example, the memory device may receive a request for the huge page 710 using a virtual address specifying the huge page 710 from the host device. The memory device may determine a page frame number from the virtual address and may determine the physical address of the huge page 710 using an offset value of the virtual address in the physical address of the huge page 710 of the page frame number. The memory device may access data of the huge page 710 using the physical address of the huge page 710.

When the huge page 710 is segmented and exists as the sub-pages 720 in the non-linear space, the respective physical addresses of the sub-pages 720 may need to be calculated. When a virtual address specifying the huge page 710 is received from the host device, the memory device may identify the page frame number of the virtual address. When a segmented state of the huge page 710 is identified based on the page frame number, the memory device may obtain a PTE and an offset value of the sub-pages 720 using the page frame number and may obtain a physical address of the sub-pages 720 by adding the offset value to an address of the PTE.

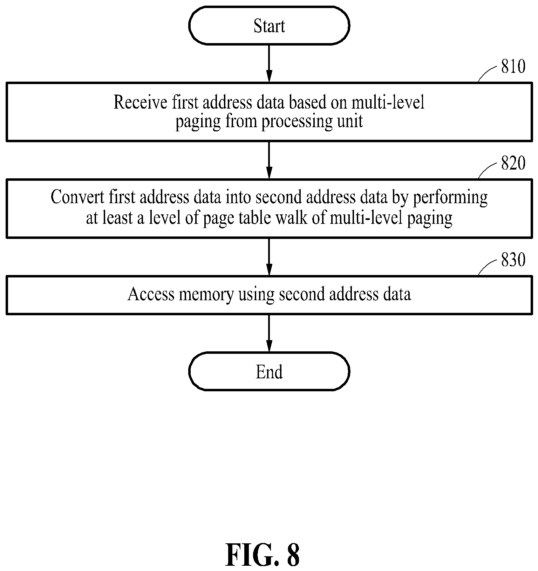

FIG. 8 illustrates a flowchart of a memory management method of a memory device according to an embodiment. Referring to FIG. 8, in operation 810, the memory device receives first address data based on multi-level paging from a processing unit; in operation 820, the memory device converts the first address data into second address data by performing at least a level of a page table walk of multi-level paging; and in operation 830, the memory device accesses a memory using the second address data.

When a page table walk on a portion of the levels of the multi-level paging is performed, in operation 820, the remaining levels of the page table walk of the multi-level paging may be performed.

A virtual address may be converted into the first address data by the page table walk on the portion of the levels, and the first address data may be converted into second address data corresponding to a physical address by the remaining level of the page table walk.

Operations 810, 820, and 830 may be performed by another component different from an MMU of the processing unit.

When a page table walk on a portion of the levels of the multi-level paging is performed on a virtual address by the processing unit, the first address data may include a conversion result of the portion of the levels of page table walk and remaining address data of remaining levels of multi-level paging.

Operation 820 may include an operation of determining the second address data by performing the remaining levels of the page table walk of multi-level paging based on the conversion result and the remaining address data.

Operation 820 may include an operation of converting first address data into second address data using a page table manager (e.g., 320) including a table cache (e.g., 321) for storing recent page table data and a table walker (e.g., 322) for performing page table walk for searching for required page table data when the required page table data for the table cache does not exist.

The first address data may indicate a huge page (e.g., 710) having a larger size than a regular page.

In addition, the descriptions provided with reference to FIGS. 1 to 7 may apply to the memory management method of FIG. 8.

The units (e.g., MMU 412, TLB 413, Table Walker 322/414, Page table manager 320, Page manager 340, CWL switch 620, etc.) described herein may be implemented using a hardware component, a software component and/or a combination thereof. A processing device (e.g., processor 411, a processing unit 410, etc.) may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purpose implement the above-described embodiments. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described embodiments, or vice versa.

As described above, although various embodiments have been described with reference to the provided drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

## Claims

1. A memory device comprising:
a memory configured to store data; and
a controller configured to receive first address data based on multi-level paging from a processing unit, convert the first address data into second address data by performing a page table walk on at least one of levels of the multi-level paging, and access the memory using the second address data.

2. The memory device of claim 1, wherein, when a page table walk on a portion of the levels of the multi-level paging is performed by the processing unit, a remaining level of the page table walk of the multi-level paging is performed by the controller.

3. The memory device of claim 2, wherein a virtual address is converted into the first address data by the page table walk on the portion of the levels, and
the first address data is converted into the second address data corresponding to a physical address by the remaining level of the page table walk.

4. The memory device of one of claims 1 to 3, wherein the controller is different from a memory management unit, MMU, of the processing unit.

5. The memory device of one of claims 1 to 4, wherein, when a page table walk on a portion of the levels of the multi-level paging is performed on a virtual address by the processing unit, the first address data comprises a conversion result of the portion of the levels of the page table walk, a remaining index of a remaining level of the multi-level paging, and a page offset.

6. The memory device of claim 5, wherein the controller is configured to determine the second address data by performing the remaining level of the page table walk of the multi-level paging based on the conversion result, the remaining index, and the page offset.

7. The memory device of one of claims 1 to 6, further comprising:
a page table manager comprising a table cache storing recent page table data and a table walker performing a page table walk for searching for page table data required for the table cache when the page table data does not exist,
wherein the controller is configured to convert the first address data into the second address data using the page table manager.

8. The memory device of one of claims 1 to 7, wherein the first address data indicates a huge page having a larger size than a regular page.

9. The memory device of claim 1 being a compute express link, CXL, memory device comprising the memory and the controller,
wherein the controller is configured to receive the first address data based on multi-level paging from a host device using a CXL connection.

10. The memory device of claim 9, wherein, when the page table walk on a portion of the levels of the multi-level paging is performed by the host device, a remaining level of the page table walk of the multi-level paging is performed by the controller.

11. The memory device of claim 9, wherein, when the page table walk on a portion of the levels of the multi-level paging is performed on a virtual address by the host device, the first address data comprises a conversion result of the portion of the levels of the page table walk and remaining address data of a remaining level of the multi-level paging.

12. The memory device of claim 11, wherein the controller is further configured to determine the second address data by performing the remaining level of the page table walk of the multi-level paging based on the conversion result and the remaining address data.

13. A method of operating an electronic device comprising a memory device including a memory and a controller, wherein the method comprises:
performing, by a processing unit of the electronic device, at least one of a plurality of levels of a page table walk on a first virtual address to output a second virtual address to the memory device, and
performing, by the controller, at least one remaining level among the plurality of levels of the page table walk on the second virtual address to generate a third virtual address to access data stored in the memory.

14. The method of claim 13 further comprising adding, by the controller, a page offset to the third virtual address to generate a physical address and accesses the data using the physical address.

15. The method of claim 13 or 14 further comprising storing, by the memory, regular pages having a first size, huge pages having a second size larger than the first size, and the first virtual address corresponds to one of the huge pages.
